# FASCICULE DE BREVET EUROPEEN

(11) **EP 2 888 452 B1**
(45) Date de publication et mention de la délivrance du brevet: **06.11.2019**
(21) Numéro de dépôt: 13733394.4
(22) Date de dépôt: 12.06.2013
(51) Int. Cl.: F01D 25/24, F02K 1/80, F02K 1/04

(54) **MOTEUR À TURBINE À GAZ COMPRENANT UNE PIÈCE COMPOSITE ET UNE PIÈCE MÉTALLIQUE RELIÉES PAR UN DISPOSITIF DE FIXATION SOUPLE**
GASTURBINENTRIEBWERK MIT EINEM TEIL AUS FASERVERBUNDWERKSTOFF UND EINEM METALLISCHEN TEIL, BEIDE TEILE VERBUNDEN MIT EINER WEICHEN BEFESTIGUNG
GAS TURBINE ENGINE COMPRISING A COMPOSITE PIECE AND A METALLIC PIECE JOINED TOGETHER BY A FLEXIBLE FIXATION

(30) Priorité: 28.06.2012 FR 1256181
(43) Date de publication de la demande: 01.07.2015
(73) Titulaire: Safran Aircraft Engines, 75015 Paris (FR)
(72) Inventeur: BEAUJARD, Antoine, Jean-Philippe, 77550 Moissy-cramayel Cedex (FR); BART, Jacques, René, 77550 Moissy-cramayel Cedex (FR)
(74) Mandataire: Gevers & Orès
(86) Numéro de dépôt international: PCT/FR2013/051378
(87) Numéro de publication internationale: WO 2014/001682

(56) Documents cités:
- EP-A1- 1 265 035
- EP-A1- 2 246 530
- EP-A2- 1 391 582
- DE-A1- 4 343 658
- US-B2- 6 675 585

## Description

La présente invention concerne le domaine des moteurs à turbine à gaz utilisés pour la propulsion d'un aéronef.

Les documents EP-A2-1 391 582, DE-A1-43 43 658 et EP-A1-2 246 530 représentent l'art antérieur. US6675585 montre les caractéristiques techniques du préambule de la revendication indépendante 1.

Afin de limiter la consommation en carburant d'un aéronef, une solution consiste à alléger la masse de l'aéronef et de ses équipements. A cet effet, il a été proposé d'alléger la masse des moteurs à turbine à gaz en utilisant des pièces en matériau composite en lieu et place de pièces en matériau métallique.

A titre d'exemple, il a été proposé de remplacer le carter de turbine basse pression d'un turboréacteur à double corps par un carter en matériau composite à matrice céramique (de type oxyde ou non) connu sous son abréviation CMC par l'homme du métier. Un carter de turbine basse pression est classiquement solidarisé à d'autres pièces du moteur qui sont métalliques. La liaison mécanique entre un carter CMC et une pièce mécanique présente des inconvénients étant donné qu'un matériau composite possède une dilatation différente d'un matériau métallique, par exemple, jusqu'à quatre fois inférieure. Il en résulte qu'il est nécessaire de mettre en place des liaisons mécaniques dites « souples » entre une pièce composite et une pièce métallique afin d'éviter de contraindre de manière excessive la pièce composite du fait des dilatations différentielles. Néanmoins, il est nécessaire que la liaison souple soit suffisamment rigide de manière à assurer une transmission des efforts entre les pièces et éviter une détérioration de la réponse dynamique des pièces reliées.

Comme illustré à la figure 1, on connaît par la demande de brevet FR2935753 A1 de la société SNECMA PROPULSION SOLIDE une liaison souple 90 entre une pièce annulaire 20 en matériau métallique solidaire du moteur aéronautique et une pièce d'arrière-corps en matériau composite à matrice céramique 30 présentant au moins dans sa partie amont une forme de révolution. La liaison souple 90 possède une première extrémité 91 fixée sur la pièce métallique 20 par une vis axiale A1 et une seconde extrémité fixée 92 sur la partie amont la pièce d'arrière corps en matériau composite 30 par une vis radiale A2.

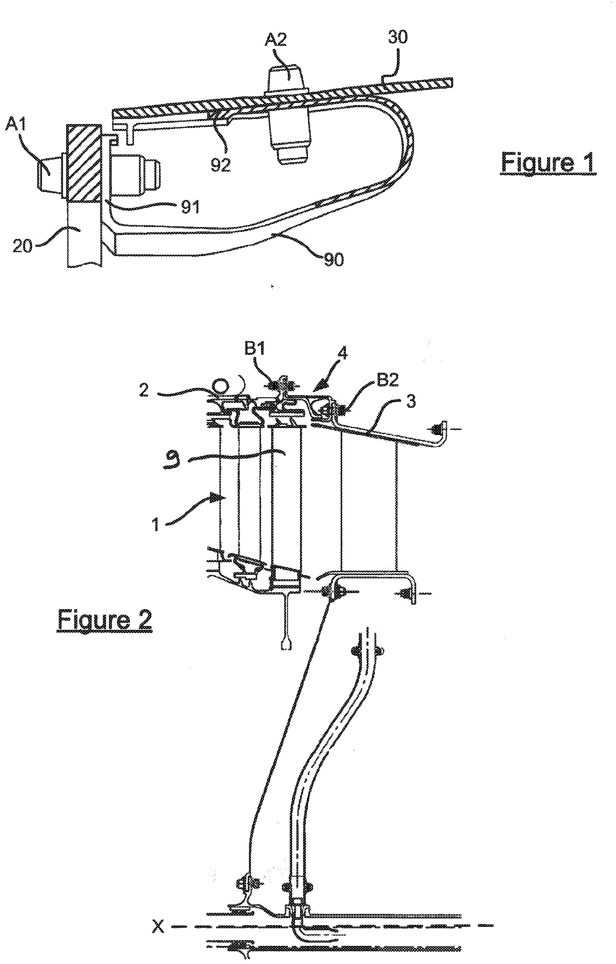

Ce type de liaison souple 90 n'est pas adapté pour des moteurs de grande taille et de masse importante étant donné qu'il nécessite l'utilisation de vis radiales A2 - pour relier la seconde extrémité 92 de la liaison souple 90 à la partie amont de la pièce d'arrière corps 30 - qui sont fortement sollicitées en cisaillement pour de tels moteurs ce qui limite leur durée de vie. Une solution pour résoudre cet inconvénient serait d'augmenter la taille des vis radiales A2 mais cela augmenterait leur masse ce qui va à l'encontre du but recherché. En outre, les vis radiales A2 peuvent présenter des inconvénients pour la transmission des efforts axiaux ainsi que pour l'étanchéité entre les deux pièces 20, 30. De plus, la liaison souple 90 illustrée à la figure 1 n'est pas adaptée pour permettre la tenue mécanique de pièces fortement sollicitées telles qu'un carter de turbine ou un carter d'échappement du fait de leur faible rigidité. Enfin, une telle liaison est susceptible d'être endommagée dans l'hypothèse d'un détachement d'un fragment d'aube.

Afin d'éliminer au moins certains de ces inconvénients, l'invention concerne un moteur à turbine à gaz pour la propulsion d'un aéronef, ledit moteur s'étendant axialement d'amont en aval et comprenant une pièce composite, une pièce métallique et un dispositif de fixation souple desdites pièces, ledit dispositif de fixation comportant :
- un élément de liaison souple comportant une première partie de fixation reliée à la pièce métallique par une première liaison axiale et une deuxième partie de fixation reliée à la pièce composite par une deuxième liaison axiale, ledit élément de liaison comportant une extrémité libre s'étendant axialement ; et
- un élément de blocage rigide comportant une partie de fixation reliée à la pièce métallique par une liaison axiale et une extrémité libre s'étendant axialement, l'extrémité libre de l'élément de blocage rigide étant alignée radialement avec l'extrémité libre de l'élément de liaison souple, l'extrémité libre de l'élément de blocage rigide formant des moyens de butée de l'extrémité libre de l'élément de liaison souple en cas de déformation de l'élément de liaison au cours du fonctionnement du moteur.

Le dispositif de fixation est relié via des liaisons axiales afin d'améliorer la transmission des efforts entre la pièce composite et la pièce métallique. Une liaison axiale possède une durée de vie supérieure à une liaison radiale qui est susceptible de subir des cisaillements.

Le dispositif de fixation permet, d'une part, de conférer une souplesse par son élément de liaison souple ce qui est avantageux pour compenser les dilatations différentielles en cours de fonctionnement et, d'autre part, de conférer, de la rigidité par son élément de blocage qui vient limiter toute distorsion excessive de l'élément de liaison et protéger la liaison.

Le dispositif de fixation selon l'invention est en outre suffisamment rigide pour permettre la transmission d'efforts structuraux entre la pièce composite et la pièce métallique.

De préférence, l'extrémité libre de l'élément de blocage est radialement extérieure à l'extrémité libre de l'élément de liaison. Ainsi, l'extrémité libre de l'élément de blocage est amenée en contact contre l'extrémité libre de l'élément de liaison lorsque l'élément de liaison se déforme de manière excessive.

De manière préférée, l'élément de liaison souple comporte une partie intermédiaire reliant la première partie de fixation à la deuxième partie de fixation, ladite partie intermédiaire comportant des ouvertures traversantes de manière à conférer de la souplesse à l'élément de liaison.

De préférence, la partie intermédiaire de l'élément de liaison souple s'étend axialement. Ainsi, toute inclinaison d'une des extrémités de l'élément de liaison est rattrapée par la souplesse de sa partie intermédiaire qui s'étend axialement.

Selon un aspect de l'invention, le dispositif de fixation comporte un élément d'étanchéité monté entre l'élément de liaison et l'élément de blocage. L'élément d'étanchéité permet d'éviter toute fuite d'un flux d'air énergétique hors du moteur, en particulier, à travers les ouvertures traversantes de l'élément de liaison. De préférence, l'élément d'étanchéité se présente sous la forme d'une tôle incurvée.

De manière préférée, l'élément de liaison et l'élément de blocage sont reliés à la pièce métallique par une même liaison axiale. Ainsi, le dispositif de fixation peut être monté de manière rapide au moteur.

Selon un aspect préféré de l'invention, la partie radialement intérieure du dispositif de fixation est épaisse par comparaison à sa partie radialement extérieure de manière à retenir tout débris du moteur. En effet, dans l'hypothèse d'un détachement d'un fragment d'aube, celui-ci se déplace radialement dans le moteur mais n'endommage pas la liaison qui est protégée par la partie radialement intérieure du dispositif de fixation qui est épaisse. Dans cet exemple, les éléments en regard des aubes sont épaissis, c'est-à-dire, l'extrémité libre de l'élément de liaison et l'élément de blocage. De manière avantageuse, le dispositif de fixation offre, d'une part, une grande souplesse pour permettre de compenser les dilatations différentielles en cours de fonctionnement, et, d'autre part, une grande rigidité pour permettre la rétention d'un fragment d'aube de turbine en cas de dysfonctionnement.

De préférence, l'élément de blocage possède une épaisseur supérieure à l'élément de liaison. Ainsi, l'élément de blocage rigide peut protéger l'élément de liaison qui est fin pour conférer plus de souplesse. Cela est particulièrement avantageux pour protéger l'élément de liaison en cas de perte d'un fragment d'aube.

De préférence encore, l'extrémité libre de l'élément de liaison possède une épaisseur supérieure à l'épaisseur de ses parties de fixation. Ainsi, cela permet de protéger la partie souple de l'élément de liaison ainsi que la liaison axiale avec la pièce composite. De manière préférée, la portion de l'extrémité libre de l'élément de liaison qui est en regard de l'extrémité libre de l'élément de blocage est moins épaisse que la portion qui n'est pas en regard pour limiter la masse du dispositif. En effet, en cas de perte d'un fragment d'aube au niveau de la portion de l'extrémité libre de l'élément de liaison qui est en regard de l'extrémité libre de l'élément de blocage, la liaison est protégée par une épaisseur d'élément de blocage et une épaisseur d'élément de liaison.

Selon un aspect préféré de l'invention, la pièce métallique est un carter de turbine d'un turboréacteur et la pièce composite est un carter d'échappement d'un turboréacteur. De préférence, le carter d'échappement est formé en matériau CMC.

L'invention sera mieux comprise à la lecture de la description qui va suivre, donnée uniquement à titre d'exemple, et se référant aux dessins annexés sur lesquels :
- la figure 1 est une vue en coupe d'une liaison souple selon l'art antérieur (déjà commentée) ;
- la figure 2 est une vue en coupe d'un turboréacteur dont le carter de turbine métallique et le carter d'échappement en matériau composite sont relié par un dispositif de fixation souple selon l'invention ;
- la figure 3 est une vue rapprochée du dispositif de fixation souple de la figure 2 ; et
- la figure 4 est une vue rapprochée de la partie amont du dispositif de fixation de la figure 2.

Il faut noter que les figures exposent l'invention de manière détaillée pour mettre en œuvre l'invention, lesdites figures pouvant bien entendu servir à mieux définir l'invention le cas échéant.

L'invention va être présentée pour un turboréacteur pour la propulsion d'un aéronef mais il va de soi que l'invention s'applique à tout moteur à turbine à gaz pour la propulsion d'un aéronef.

Dans cet exemple, le turboréacteur comporte un carter de turbine basse pression en matériau métallique et un carter d'échappement en matériau composite qui sont reliés par un dispositif de fixation selon l'invention. Il va de soi que l'invention peut s'appliquer à la liaison d'une autre pièce métallique avec une autre pièce composite du turboréacteur.

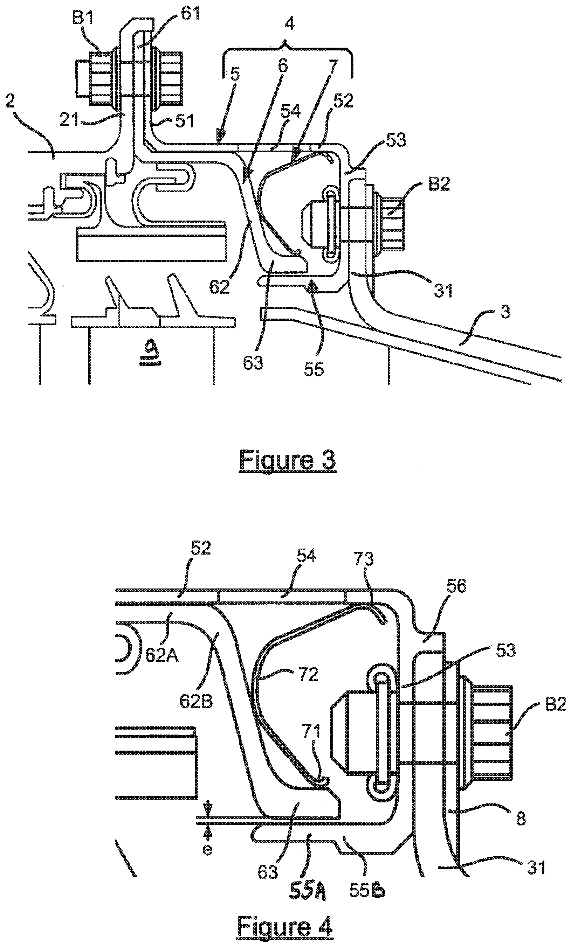

Comme représenté à la figure 2, un turboréacteur à double corps s'étend axialement, d'amont en aval, selon un axe X et comporte un carter axial de turbine basse pression 2 en matériau métallique relié à un carter axial d'échappement 3 en matériau composite par un dispositif de fixation 4. Le carter axial de turbine basse pression 2 est une pièce annulaire s'étendant axialement selon l'axe X et est radialement extérieur au corps basse pression 1 du turboréacteur à double corps. En référence à la figure 2, le corps basse pression 1 comporte un arbre basse pression sur lequel sont montées des aubes radiales 9. Le carter de turbine basse pression 2 est une pièce structurale qui permet avantageusement de reprendre la poussée générée par le turboréacteur afin de la transmettre à l'aéronef sur lequel est monté le turboréacteur. Le carter de turbine basse pression 2 est en alliage métallique résistant à chaud de type austénitique et est terminé à son extrémité aval par une bride de fixation 21 comme illustrée sur la figure 3. La bride de fixation aval 21 s'étend radialement et comporte une pluralité d'orifices répartis à sa circonférence pour permettre une liaison axiale B1 avec le dispositif de fixation 4 comme cela sera détaillé par la suite.

Le carter axial d'échappement 3 - également annulaire - est monté en aval du carter de turbine basse pression 2 et permet de guider les gaz d'échappement issus de la chambre de combustion du turboréacteur située en amont de la turbine haute pression. Afin d'alléger sa masse, le carter d'échappement 3 est en matériau composite. Dans cet exemple, le carter d'échappement 3 est en matériau composite à matrice céramique connu sous son abréviation CMC par l'homme du métier. Comme représenté sur la figure 3, le carter d'échappement 3 comporte à son extrémité amont une bride de fixation 31 qui s'étend radialement et qui comporte une pluralité d'orifices répartis à sa circonférence pour permettre une liaison axiale B2 avec le dispositif de fixation 4 comme cela sera détaillé par la suite.

Comme illustré aux figures 2 et 3, le carter de turbine basse pression 2 et le carter d'échappement 3 sont reliés par un dispositif de fixation souple 4 selon l'invention de manière à compenser les dilatations différentielles entre lesdits carters 2, 3. En référence à la figure 3, le dispositif de fixation souple 4 comporte un élément annulaire de liaison souple 5 et un élément annulaire de blocage rigide 6.

### Élément de liaison souple 5

Dans cet exemple, l'élément de liaison 5 du dispositif de fixation souple 4 se présente sous la forme d'une pièce monobloc en métal, de préférence, en alliage métallique résistant à chaud du type austénitique à base Nickel.

Comme illustré à la figure 3, l'élément de liaison 5 comporte, d'amont en aval, une partie de fixation amont 51 au carter de turbine basse pression 2, une partie intermédiaire 52 et une partie de fixation aval 53 au carter d'échappement 3. La partie de fixation amont 51 se présente sous la forme d'une bride de fixation qui s'étend radialement et qui comporte une pluralité d'orifices répartis à sa circonférence pour permettre une première liaison axiale B1 avec la bride de fixation 21 du carter de turbine basse pression 2. Autrement dit, l'élément de liaison 5 possède en amont une forme en L.

La partie intermédiaire 52 de l'élément de liaison 5 s'étend axialement entre les parties de fixation 51, 53 et comporte des ouvertures traversantes 54 réparties à sa circonférence de manière à conférer une souplesse à l'élément de liaison 5. Dans cet exemple, l'élément de liaison 5 comporte plusieurs ouvertures traversantes 54 d'un diamètre de l'ordre de 500 mm mais il va de soi que le nombre et les dimensions des ouvertures 54 peuvent varier afin de conférer la souplesse souhaitée à l'élément de liaison 5. Il va de soi que la partie intermédiaire 52 de l'élément de liaison 5 pourrait également présenter une autre forme. De préférence, la partie intermédiaire 52 de l'élément de liaison 5 possède une épaisseur de l'ordre de 1-2 mm pour conférer de la souplesse.

La partie de fixation aval 53 de l'élément de liaison 5 s'étend radialement et comporte une pluralité d'orifices répartis à sa circonférence pour permettre une deuxième liaison axiale B2 avec la bride de fixation 31 du carter d'échappement 3. La partie de fixation aval 53 est terminée par une extrémité libre 55 qui s'étend axialement de l'aval vers l'amont depuis l'extrémité radialement inférieure de la partie de fixation aval 53 comme représenté sur les figures 3 et 4. Ainsi, l'extrémité libre 55 est radialement inférieure à la partie intermédiaire 52 de l'élément de liaison 5. Autrement dit, l'élément de liaison 5 possède en aval une forme de U dont la base du U s'étend radialement et dont les branches du U s'étendent axialement comme illustré aux figures 3 et 4. L'élément de liaison 5 se présente ainsi globalement sous la forme d'une « cage d'écureuil » du fait de son caractère circulaire et de la présence d'ouvertures radiales traversantes 54.

L'extrémité libre 55 de l'élément de liaison 5 possède une épaisseur supérieure à l'épaisseur de la partie intermédiaire 52 de l'élément de liaison 5 de manière à former une protection du dispositif de fixation 4 en cas de perte d'un fragment d'une aube 9 du turboréacteur.

Dans cet exemple, en référence à la figure 4, la portion 55A de l'extrémité libre 55 de l'élément de liaison 5 qui est en regard de l'extrémité libre 63 de l'élément de blocage 6 est moins épaisse que la portion 55B qui n'est pas en regard pour limiter la masse du dispositif. En effet, en cas de perte d'un fragment d'aube au niveau de la portion 55A qui est en regard avec l'extrémité libre 63 de l'élément de blocage 6, la liaison est protégée par une épaisseur d'élément de blocage 6 et une épaisseur d'élément de liaison 5 ce qui assure une protection suffisante tout en limitant la masse. De préférence, la portion 55B de l'élément de liaison 5 possède une épaisseur de l'ordre de 5 mm tandis que la portion 55A de l'élément de liaison 5 possède une épaisseur de l'ordre de 2 mm.

### Élément de blocage rigide 6

Toujours en référence à la figure 3, l'élément de blocage 6 du dispositif de fixation 4 comporte, d'amont en aval, une partie de fixation amont 61 au carter de turbine basse pression 2, une partie intermédiaire 62 et une partie libre 63 (désignée également extrémité libre 63). La partie de fixation amont 61 se présente sous la forme d'une bride de fixation qui s'étend radialement et qui comporte une pluralité d'orifices répartis à sa circonférence pour permettre une liaison axiale avec la bride de fixation 21 du carter de turbine basse pression 2 et la bride de fixation 51 de l'élément de liaison 5 comme cela sera détaillé par la suite. La partie intermédiaire 62 de l'élément de blocage 6 s'étend globalement obliquement entre la partie de fixation 61 et l'extrémité libre 63 de l'élément de blocage 6 de manière à ce que l'extrémité libre 63, qui s'étend axialement, soit située entre la partie intermédiaire 52 de l'élément de liaison 5 et son l'extrémité libre 55 comme représenté sur la figure 3. De préférence, la partie intermédiaire 62 de l'élément de blocage 6 comporte une portion amont axiale 62A et une portion aval oblique 62B comme représenté à la figure 4. Ainsi, la portion aval oblique 62B permet avantageusement d'éviter que l'élément de blocage 6 soit en contact avec les ouvertures traversantes 54 de l'élément de liaison 5 qui confèrent de la souplesse à l'élément de liaison 5.

De préférence, l'extrémité libre axiale 63 de l'élément de blocage 6 s'étend sur toute sa longueur entre la partie intermédiaire 52 de l'élément de liaison 5 et son l'extrémité libre 55 comme représenté sur la figure 4. De manière préférée, en référence à la figure 4, l'espace radial « e » entre les extrémités libres 55, 63 du dispositif de fixation 4 est de l'ordre de quelques millimètres de manière à limiter la circulation d'air de l'intérieur vers l'extérieur du turboréacteur.

Les extrémités libres 55, 63 du dispositif de fixation 4 forment des moyens de butée en cas d'un dysfonctionnement connu de l'homme du métier sous son abréviation anglaise FBO pour « Fan Blade Out ». Pour ce type de dysfonctionnement, le carter d'échappement 3 est sollicité mécaniquement selon des directions transversales à l'axe du moteur. L'extrémité libre 55 de l'élément de liaison 5 vient avantageusement en butée radiale avec l'extrémité libre 63 de l'élément de blocage 6 pour limiter l'amplitude des sollicitations. Les propriétés structurales du dispositif de fixation 4 sont alors renforcées.

L'élément de blocage 6 possède une épaisseur supérieure à la partie intermédiaire 52 de l'élément de liaison 5 de manière à former une protection de l'élément de liaison 5 en assurant la fonction de rétention des fragments des aubes 9 les plus proches de la liaison souple. En effet, comme illustré sur la figure 3, la partie intermédiaire souple 52 de l'élément de liaison 5 est protégée par l'élément de blocage 6 évitant ainsi toute détérioration en cas de choc avec un fragment d'aube 9. De préférence, l'élément de blocage 6 possède une épaisseur de l'ordre de 5 mm

### Élément d'étanchéité 7

De manière préférée, en référence aux figures 3 et 4, le dispositif de fixation 4 comporte un élément d'étanchéité 7 monté entre l'élément de liaison 5 et l'élément de blocage 6 adapté pour obturer l'espace annulaire entre lesdits éléments 5, 6. Autrement dit, l'élément d'étanchéité 7 permet d'interdire la circulation vers l'extérieur du turboréacteur d'un flux d'air énergétique circulant intérieurement aux carters 2, 3. Un défaut d'étanchéité conduit à une perte du rendement de propulsion de l'aéronef ce qui est désavantageux.

Comme la partie intermédiaire 52 de l'élément de liaison 5 comporte des ouvertures traversantes 54 susceptibles de permettre la circulation vers l'extérieur d'un flux d'air énergétique, l'élément d'étanchéité 7 permet d'empêcher cette circulation et d'éviter toute perte de poussée. Comme illustré en détails à la figure 4, l'élément d'étanchéité 7 se présente sous la forme d'une tôle incurvée annulaire, de préférence en alliage métallique à base Cobalt/Nickel résistant à chaud, de forme en V dont l'ouverture est tournée vers l'amont. L'élément d'étanchéité 7 possède un corps curviligne 72 dont une première extrémité 71 est en contact avec la surface extérieure de l'extrémité libre 63 de l'élément de blocage 6 et dont une deuxième extrémité 73 est en contact avec la surface intérieure de la partie intermédiaire 52 de l'élément de liaison 5, de manière préférée, en amont des ouvertures traversantes 54 comme illustré à la figure 4. L'élément d'étanchéité 7 est de préférence en appui selon deux zones de contact distinctes avec l'élément de blocage (partie intermédiaire 62 et extrémité libre 63). De préférence, l'élément d'étanchéité 7 est configuré pour se déformer en fonction du régime du turboréacteur afin que sa forme d'obturation optimale soit obtenue en régime de croisière, un flux d'air énergétique - circulant à travers l'espace radial « e » entre les extrémités libres 55, 63 du dispositif de fixation 4 - venant déformer l'élément d'étanchéité 7.

L'élément d'étanchéité 7 possède une masse réduite et permet d'éviter toute perte de poussée sans nuire à la souplesse du dispositif de fixation 4 ce qui est avantageux.

Le dispositif de fixation 4 est simple à monter entre le carter de turbine basse pression 2 et le carter d'échappement 3 étant donné, qu'en amont, les brides de fixation 21, 61, 51 du carter de turbine basse pression 2, de l'élément de blocage 6 et de l'élément de liaison 5 sont reliées par une même liaison axiale B1, ici une liaison boulonnée B1 et, qu'en aval, les brides de fixation 53, 31 de l'élément de liaison 5 et du carter d'échappement 3 sont reliés par une liaison axiale B2, ici une liaison boulonnée B2. Le montage du dispositif de fixation 4 est rapide et robuste, une liaison axiale B1, B2 permettant de transmettre des efforts axiaux sans risque de cisaillement contrairement à une liaison radiale. De manière préférée, l'élément d'étanchéité 7 est monté entre l'élément de liaison 5 et l'élément de blocage 6 préalablement à leurs montages aux carters 2, 3 du turboréacteur.

En fonctionnement, le carter de turbine basse pression 2, en métal, se dilate plus que le carter d'échappement 3 ce qui induit une déformation du dispositif de fixation 4 dont la partie amont se redresse. Du fait de la souplesse de l'élément de liaison 5 du dispositif de fixation 4, la dilatation différentielle est absorbée par le dispositif de fixation 4. En cas de distorsion importante, par exemple la perte d'une aube de soufflante, la déformation du dispositif de fixation 4 peut être très importante. La présence de moyens de butée limite cette déformation en permettant une transmission des efforts reçus par l'élément de liaison 5 à l'élément de blocage 6 lorsque l'extrémité libre 63 de l'élément de blocage 6 est en contact avec l'élément de liaison 5. En outre, l'épaisseur de l'élément de blocage 6 et de l'extrémité libre 55 de l'élément de liaison 5 permet de protéger le dispositif de fixation 4 en cas de choc avec un fragment d'aube. Enfin, l'élément d'étanchéité 7 possède une forme optimale au cours du fonctionnement du turboréacteur pour empêcher toute fuite d'air de haute énergie, en particulier, à travers les ouvertures traversantes de l'élément de liaison 5. Cela permet de conserver un rendement optimal du turboréacteur.

Il a été présenté une pièce amont métallique et une pièce aval en matériau composite mais il va de soi que l'invention s'applique à tout agencement de pièces, en particulier, une pièce amont en matériau composite et une pièce aval métallique.

## Revendications

1. Moteur à turbine à gaz pour la propulsion d'un aéronef, ledit moteur s'étendant axialement d'amont en aval et comprenant une pièce composite (3), une pièce métallique (2) et un dispositif (4) de fixation souple desdites pièces (2, 3), **caractérisé en ce qu'**il comporte :
- un élément de liaison souple (5) comportant une première partie de fixation (51) reliée à la pièce métallique (2) par une première liaison axiale (B1) et une deuxième partie de fixation (53) reliée à la pièce composite (3) par une deuxième liaison axiale (B2), ledit élément de liaison souple (5) comportant une extrémité libre (55) s'étendant axialement ; et
- un élément de blocage rigide (6) comportant une partie de fixation (61) reliée à la pièce métallique (2) par une liaison axiale (B1) et une extrémité libre (63) s'étendant axialement, l'extrémité libre (63) de l'élément de blocage rigide (6) étant alignée radialement avec l'extrémité libre (55) de l'élément de liaison souple (5), l'extrémité libre (63) de l'élément de blocage rigide (6) formant des moyens de butée de l'extrémité libre (55) de l'élément de liaison souple (5) en cas de déformation radiale de l'élément de liaison (5) au cours du fonctionnement du moteur.

2. Moteur selon la revendication 1, dans lequel l'extrémité libre (63) de l'élément de blocage (6) est radialement extérieure à l'extrémité libre (55) de l'élément de liaison (5).

3. Moteur selon l'une des revendications 1 à 2, dans lequel l'élément de liaison souple (5) comporte une partie intermédiaire (52) reliant la première partie de fixation (51) à la deuxième partie de fixation (53), ladite partie intermédiaire (52) comportant des ouvertures traversantes (54) de manière à conférer de la souplesse à l'élément de liaison (5).

4. Moteur selon la revendication 3, dans lequel la partie intermédiaire (52) de l'élément de liaison souple (5) s'étend axialement.

5. Moteur selon l'une des revendications 1 à 4, dans lequel le dispositif de fixation comporte un élément d'étanchéité (7) monté entre l'élément de liaison (5) et l'élément de blocage (6).

6. Moteur selon la revendication 5, dans lequel l'élément d'étanchéité (7) se présente sous la forme d'une tôle incurvée.

7. Moteur selon l'une des revendications 1 à 6, dans lequel l'élément de liaison (5) et l'élément de blocage (6) sont reliés à la pièce métallique (2) par une même liaison axiale (B1).

8. Moteur selon l'une des revendications 1 à 7, dans lequel la partie radialement intérieure du dispositif de fixation (4) est épaisse par comparaison à sa partie radialement extérieure de manière à retenir tout débris du moteur.

9. Moteur selon l'une des revendications 1 à 8, dans lequel l'élément de blocage (6) possède une épaisseur supérieure à l'élément de liaison (5).

10. Moteur selon l'une des revendications 1 à 9, dans lequel l'extrémité libre (55) de l'élément de liaison (5) possède une épaisseur supérieure à l'épaisseur de ses parties de fixation (51, 53).

11. Moteur selon l'une des revendications 1 à 10, dans lequel la pièce métallique (2) est un carter de turbine d'un turboréacteur et la pièce composite (3) est un carter d'échappement d'un turboréacteur.

## Patentansprüche

1. Gasturbinentriebwerk für den Antrieb eines Luftfahrzeugs, wobei sich das Triebwerk axial von stromaufwärts nach stromabwärts erstreckt und ein Verbundwerkstoffstück (3), ein Metallstück (2) und eine Vorrichtung (4) zur weichen Befestigung der Stücke (2, 3) umfasst, **dadurch gekennzeichnet, dass** es Folgendes einschließt:
- ein weiches Verbindungselement (5), das einen ersten Befestigungsteil (51) einschließt, der mit dem Metallstück (2) durch eine erste axiale Verbindung (B1) verbunden ist, und einen zweiten Befestigungsteil (53), der mit dem Verbundwerkstoffstück (3) durch eine zweite axiale Verbindung (B2) verbunden ist, wobei das weiche Verbindungselement (5) ein freies Ende (55) einschließt, das sich axial erstreckt; und
- ein starres Sperrelement (6), das einen Befestigungsteil (61) einschließt, der mit dem Metallstück (2) durch eine axiale Verbindung (B1) verbunden ist, und ein freies Ende (63), das sich axial erstreckt, wobei das freie Ende (63) des starren Sperrelements (6) radial mit dem freien Ende (55) des weichen Verbindungselements (5) ausgerichtet ist, wobei das freie Ende (63) des starren Sperrelements (6) Anschlagmittel des freien Endes (55) des weichen Verbindungselements (5) für den Fall einer radialen Verformung des Verbindungselements (5) im Laufe des Betriebs des Triebwerks bildet.

2. Triebwerk nach Anspruch 1, wobei das freie Ende (63) des Sperrelements (6) radial außerhalb des freien Endes (55) des Verbindungselements (5) liegt.

3. Triebwerk nach einem der Ansprüche 1 bis 2, wobei das weiche Verbindungselement (5) einen Zwischenteil (52) einschließt, der den ersten Befestigungsteil (51) mit dem zweiten Befestigungsteil (53) verbindet, wobei der Zwischenteil (52) durchgehende Öffnungen (54) derart einschließt, dass dem Verbindungselement (5) Weichheit verliehen wird.

4. Triebwerk nach Anspruch 3, wobei sich der Zwischenteil (52) des weichen Verbindungselements (5) axial erstreckt.

5. Triebwerk nach einem der Ansprüche 1 bis 4, wobei die Befestigungsvorrichtung ein Dichtungselement (7) einschließt, das zwischen dem Verbindungselement (5) und dem Sperrelement (6) montiert ist.

6. Triebwerk nach Anspruch 5, wobei das Dichtungselement (7) die Form eines gebogenen Blechs aufweist.

7. Triebwerk nach einem der Ansprüche 1 bis 6, wobei das Verbindungselement (5) und das Sperrelement (6) mit dem Metallstück (2) durch eine gleiche axiale Verbindung (B1) verbunden sind.

8. Triebwerk nach einem der Ansprüche 1 bis 7, wobei der radial innere Teil der Befestigungsvorrichtung (4) im Vergleich zu ihrem radial äußeren Teil derart stark ist, dass jegliche Trümmer des Triebwerks zurückgehalten werden.

9. Triebwerk nach einem der Ansprüche 1 bis 8, wobei das Sperrelement (6) eine Stärke besitzt, die größer ist als das Verbindungselement (5).

10. Triebwerk nach einem der Ansprüche 1 bis 9, wobei das freie Ende (55) des Verbindungselements (5) eine Stärke größer als die Stärke seiner Befestigungsteile (51, 53) besitzt.

11. Triebwerk nach einem der Ansprüche 1 bis 10, wobei das Metallstück (2) ein Turbinengehäuse eines Turbostrahltriebwerks ist und das Verbundwerkstoffstück (3) ein Austrittsgehäuse eines Turbostrahltriebwerks ist.

## Claims

1. Gas turbine engine for the propulsion of an aircraft, said engine extending axially from upstream to downstream and comprising a composite part (3), a metal part (2) and a flexible attachment device (4) of said parts (2, 3), **characterised in that** it comprises:
- a flexible connecting element (5) comprising a first attachment part (51) connected to the metal part (2) by a first axial connection (B1) and a second attachment part (53) connected to the composite part (3) by a second axial connection (B2), said flexible connecting element (5) comprising a free end (55) extending axially; and
- a rigid blocking element (6) comprising an attachment part (61) connected to the metal part (2) by an axial connection (B1) and a free end (63) extending axially, the free end (63) of the rigid blocking element (6) being aligned radially with the free end (55) of the flexible connecting element (5), the free end (63) of the rigid blocking element (6) forming abutment means of the free end (55) of the flexible connecting element (5) in case of radial deformation of the connecting element (5) during engine operation.

2. Engine according to claim 1, wherein the free end (63) of the blocking element (6) is radially outside the free end (55) of the flexible connecting element (5).

3. Engine according to any of claims 1 to 2, wherein the flexible connecting element (5) comprises an intermediate part (52) connecting the first attachment part (51) to the second attachment part (53), said intermediate part (52) comprising through-holes (54) so as to give flexibility to the connecting element (5).

4. Engine according to claim 3, wherein the intermediate part (52) of the connecting element (5) extends axially.

5. Engine according to any of claims 1 to 4, wherein the attachment device comprises a sealing element (7) mounted between the connecting element (5) and the blocking element (6).

6. Engine according to claim 5, wherein the sealing element (7) has the form of a curved metal sheet.

7. Engine according to any of claims 1 to 6, wherein the connecting element (5) and the blocking element (6) are connected to the metal part (2) by the same axial connection (B1).

8. Engine according to any of claims 1 to 7, wherein the radially inner part of the attachment device (4) is thick in comparison to the radially outer part so as to be able to retain any debris from the engine.

9. Engine according to any of claims 1 to 8, wherein the blocking element (6) has a greater thickness than the connecting element (5).

10. Engine according to any of claims 1 to 9, wherein the free end (55) of the connecting element (5) has a greater thickness than the thickness of its attachment parts (51, 53).

11. Engine according to any of claims 1 to 10, wherein the metal part (2) is a turbine casing of a turbine engine and the composite part (3) is an exhaust casing of a turbine engine.
